# EUROPÄISCHE PATENTANMELDUNG

(11) **EP 3 527 306 A1**
(43) Veröffentlichungstag der Anmeldung: **21.08.2019**
(21) Anmeldenummer: 18156802.3
(22) Anmeldetag: 14.02.2018
(51) Int. Cl.: B22F 1/02, C22C 29/08, B22F 9/22, C22C 29/02, C22C 29/16

(54) **PULVER UMFASSEND BESCHICHTETE HARTSTOFFPARTIKEL**

(71) Anmelder: H.C. Starck Tungsten GmbH, 38642 Goslar (DE)
(72) Erfinder: Meese-Marktscheffel, Juliane Dr., 38642 Goslar (DE); Olbrich, Armin Dr., 38723 Seesen (DE); Weiland, Anja, 38685 Langelsheim (DE); van der Pütten, Frank, 38640 Goslar (DE); Lamprecht, Ines, 38723 Seesen (DE)
(74) Vertreter: dompatent von Kreisler Selting Werner - Partnerschaft von Patent- und Rechtsanwälten mbB

(57) **Zusammenfassung**

Die vorliegende Erfindung betrifft ein Verfahren zur Herstellung von mit einer hydroxidischen Cobaltverbindung beschichteten Hartstoffen sowie Pulver, die die beschichteten Hartstoffpartikel umfassen und deren Verwendung.

## Beschreibung

Die vorliegende Erfindung betrifft ein Verfahren zur Herstellung von mit einer hydroxidischen Cobaltverbindung beschichteten Hartstoffen sowie Pulver, die die beschichteten Hartstoffpartikel umfassen und deren Verwendung.

Hartmetalle werden seit nunmehr über hundert Jahren u. a. zur Herstellung besonders leistungsfähiger Schneid- und Bohrwerkzeuge verwendet.

Unter dem Begriff Hartmetall werden gesinterte Verbundwerkstoffe aus metallischen Hartstoffen verstanden, die aufgrund ihrer hohen Härte alleine allerdings eine vergleichsweise hohe Sprödigkeit aufweisen, und daher in der Regel in einer metallischen Matrix vorwiegend aus der Gruppe der weichen, zähen Eisengruppenelemente Fe, Co, Ni (sogenannte Binder oder Bindemetalle) eingebettet werden, um sie so einer praktischen Verwendung zugänglich machen zu können. Metallische Hartstoffe selbst bestehen typischerweise aus Carbiden, Nitriden, Siliciden und/oder Boriden diverser Übergangsmetalle. Typischerweise werden als Übergangsmetalle hochschmelzende Refraktärmetalle wie Wolfram, Tantal, Niob und/oder Molybdän genutzt, aber auch andere Übergangsmetalle wie Chrom, Vanadium und Titan, inklusive ihrer Mischkristalle.

Eines der gängigsten Hartmetalle ist das WC/Co-Hartmetall, das auch heute noch den bei weitem größten Marktanteil besitzt, wobei je nach Verwendung eine große Bandbreite der WC-Pulver bezüglich ihrer Partikelgröße, ihrer Partikelgrößenverteilung und dem Anteil an Cobalt besteht.

Um ein gleichmäßiges Gefüge im Werkstoff zu erhalten, muss bei der konventionellen (nicht-additiven) pulvermetallurgischen Hartmetall-Herstellung zunächst das WC-Pulver mit Co-Pulver intensiv vermischt werden. Dies geschieht üblicherweise dadurch, dass das WC-Pulver mit einem geeignetem Cobaltpulver in z. B. Attritoren oder Rührwerkskugelmühlen gemeinsam typischerweise in Anwesenheit flüssiger Kohlenwasserstoffe (z. B. Hexan) vermahlen wird, welche nach Abschluss des Mischvorganges wieder durch Vakuumtrocknung entfernt werden. Anschließend wird, in der Regel nach Zugabe von Additiven, wie Paraffin bzw. organischen Wachsen, ein Grünkörper gepresst, z. B. via Extrudieren (Strangpressen), Spritzguss/MIM (Heiß oder Kaltpressen) oder axialem Kaltpressen. Nach Entbindern des Grünkörpers bei gemäßigten Temperaturen zur Entfernung der nochvorhandenen organischen Bestandteile, erfolgt die weitere Verdichtung durch Sintern bei Temperaturen im Bereich der Schmelztemperatur des metallischen Binders. In einem anschließenden Schritt kann gegebenenfalls noch heiß isostatisch nachverpresst und das resultierende Hartmetallbauteil einer weiteren mechanischen Nachbearbeitung (wie Drehen, Fräsen und/oder Schleifen) und/oder Beschichtungsprozessen (CVD oder PVD) zugeführt werden.

Von besonderer Bedeutung in der Hartmetallfertigung ist der Sinterschritt, bei dem, wie eben schon ausgeführt, durch das Sintern bei hohen Temperaturen z. B. in der Nähe des Schmelzpunktes von Cobalt (1495°C) ein praktisch dichter Körper aus Hartmetall entsteht. Dabei ist insbesondere die optimale Verteilung der Cobalt- und WC-Partikel in der Vormischung von hoher Bedeutung, deren Einstellung mit erheblichen Schwierigkeiten verbunden sein kann, insbesondere dann, wenn man berücksichtigt, dass sowohl ultra-feine (nano) WC-Pulver über mittlere Qualitäten im 1 µm-Bereich bis hin zu ganz groben WC-Pulvern (um 40-100 µm) mit massenmäßig viel weniger Cobaltmetallpulver möglichst homogen gemischt werden müssen.

Eine von vornherein wesentlich bessere, homogenere Verteilung des Cobalts wäre sicherlich durch eine Cobalt-Beschichtung der WC-Partikel zu erreichen. So besteht in der Hartmetall-Industrie seit längerem der Wunsch, derartige Pulver für Testzwecke über ein industriell praktikables und wirtschaftliches Fertigungsverfahren zur Verfügung gestellt zu bekommen. Vorstellbar ist beispielsweise, dass bei hinreichend gleichmäßiger Beschichtung auf das aufwendige, gemeinsame Vermahlen von WC- und Cobaltpulvern in Attritoren oder Rührwerkskugelmühlen dann ganz verzichtet werden könnte. Dies bedeutet gleichermaßen, dass auch die sicherheitstechnisch äußerst anspruchsvolle Handhabung organischer Lösemittel entfallen könnte und auch die Handlingsoperationen des mittlerweile nicht nur als inhalativ cancerogen sondern auch als dermal cancerogen angesehenen Cobaltmetallpulvers beim Hartmetallhersteller minimiert werden könnten.

Prinzipiell kann man die Beschichtung der Hartstoffpartikel mit metallischem Cobalt direkt durch chemische Reduktion von Co²⁺-Ionen erreichen. Dies ist allgemein bekannt und die Beschichtung von Substraten mit beispielsweise Nickel oder Cobalt wird mit speziellen Badzusammensetzungen in der sogenannten stromlosen Beschichtung in großem Umfang genutzt. Gängige Reduktionsmittel sind z.B. Hypophosphite, Hydrazin oder organische Reduktionsmittel mit ausreichender Reduktionskraft. Damit bei diesen Verfahren die Metallabscheidung aber tatsächlich auf dem gewünschten Substrat erfolgt und es nicht zu sogenannten wilden Fällungen kommt, muss in der Regel die Substratoberfläche mit Fremdkristallen, wie z. B. Palladiumkristallen, geimpft werden, die dann als Keime für die eigentliche Metallabscheidung dienen. In der Hartmetallpulverherstellung ist die Verwendung von Palladium aus wirtschaftlichen und anderen Gründen nicht möglich.

WO 2006/069614 beschreibt ein Verfahren, in dem eine metallische Beschichtung mit Cobalt durch Reduktion aus ammoniakalischer Co(II)-Salzlösung mit Wasserstoff bei 180°C und einem Druck von 34,5 bar erreicht wird.

WO 2004/26509 beschreibt ein Verfahren, bei dem die Hartstoffpartikel zunächst mit einem Metallsalz beschichtet werden und die Metallsalzschicht anschließend bei 200°C unter Druck intermediär in oxidische oder hydroxidische Verbindungen umgewandelt werden sollen und abschließend durch Beaufschlagung des Reaktors mit Wasserstoff bei einem Druck von 30 bar und einer Temperatur von 200°C die Reduktion zu metallischem Cobalt erfolgt.

Den Verfahren ist gemein, dass das metallische Cobalt durch Reduktion mit Wasserstoff in wässrigem Medium bei erhöhter Temperatur und einem sehr hohen Wasserstoffdruck von mindestens 30bar in Autoklaven erzeugt wird.

Aufgabe der vorliegenden Erfindung ist es, ein einfaches Verfahren zur Beschichtung von Hartstoffpartikeln mit Cobalt bereitzustellen, das die im Stand der Technik erforderlichen, extremen und sicherheitstechnisch sehr anspruchsvollen Reaktionsbedingungen vermeidet und zugleich ein sehr gleichmäßiges Aufbringen der Beschichtung erlaubt.

Es wurde überraschend gefunden, dass die Aufgabe durch ein druckloses Verfahren gelöst wird, bei dem Hartstoffpartikel in einem ersten Schritt mit einer hydroxidischen Verbindung des Cobalts beschichtet werden und in einem zweiten Schritt die hydroxidische Cobaltverbindung zu metallischem Cobalt reduziert wird.

Ein erster Gegenstand der vorliegenden Erfindung ist daher ein Verfahren zur Herstellung von beschichteten Hartstoffpartikeln umfassend die folgenden Schritte:
a) Bereitstellen einer wässrigen Lösung umfassend mindestens einen Cobaltammin-Komplex;
b) Zugabe von Hartstoffpartikeln zu der wässrigen Lösung unter Erhalt einer Suspension umfassend mit einer hydroxidischen Cobaltverbindung beschichtete Hartstoffpartikel; und
c) Abtrennen der beschichteten Hartstoffpartikel.

Die hydroxidische Verbindung des Cobalts ist vorzugsweise ausgewählt aus der Gruppe bestehend aus Cobalt(III)hydroxid, Cobaltoxyhydroxid, Cobalt(II)hydroxid und Mischungen davon.

Im Rahmen der vorliegenden Erfindung handelt es sich bei den dreiwertigen Cobalthydroxidverbindungen um Verbindungen der chemischen Formel CoOₓ(OH)₃₋₂ₓ mit 0≤x≤1.

Weiterhin im Rahmen der vorliegenden Erfindung handelt es sich bei Cobalt(II)hydroxid um die Verbindung der chemischen Formel Co(OH)₂.

Bei den Mischungen der beiden handelt es sich im Sinne der vorliegenden Erfindung um Verbindungen der chemischen Formel CoOₓ(OH)_{y} mit y=z-2x, wobei z die Oxidationsstufe des Cobalts bedeutet mit 2≤z≤3 und 0≤x≤z-2 gilt.

Bevorzugt nimmt z die Werte 2,5≤z≤3 und besonders bevorzugt die Werte 2,9<z≤3 an.

In einer bevorzugten Ausführungsform des erfindungsgemäßen Verfahrens handelt es sich bei den Hartstoffpartikeln um Carbide, Nitride und/oder Carbonitride der Übergangsmetalle ausgewählt aus der Gruppe bestehend aus Wolfram, Tantal, Niob, Molybdän, Chrom, Vanadium, Titan und Mischungen davon.

Hartstoffe zeichnen sich insbesondere durch eine hohe Härte verbunden mit einem hohen Schmelzpunkt aus. Daher ist eine Ausführungsform bevorzugt, in der es sich bei dem Hartstoff um Wolframcarbid (WC) handelt.

Es wurde überraschend gefunden, dass eine besonders gleichmäßige Beschichtung der Hartstoffpartikel mit der hydroxidischen Cobaltverbindung erzielt werden kann, wenn als Cobaltamminkomplex Co(III)hexammin-Komplexe verwendet werden. Daher ist eine Ausführungsform bevorzugt, in der es sich bei dem Cobaltamminkomplex um einen Cobalthexammin-Komplex handelt.

In einer bevorzugten Ausführungsform wird die wässrige Lösung Schritt a) dadurch hergestellt, dass eine wässrige Lösung umfassend mindestens ein Co(II)-Salz mit Ammoniak versetzt wird und die erhaltene Mischung anschließend mit einem Oxidationsmittel versetzt wird.

Vorzugsweise ist das Oxidationsmittel ausgewählt aus der Gruppe bestehend aus Luft, Sauerstoff, Wasserstoffperoxid und Mischungen davon.

In einer weiterhin bevorzugten Ausführungsform des erfindungsgemäßen Verfahrens ist das Co(II)-Salz ausgewählt aus der Gruppe bestehend aus Sulfat, Nitrat, Chlorid, Acetat sowie Mischungen hiervon. Besonders bevorzugt handelt es sich bei dem Co(II)-Salz um Cobaltsulfat. In einer alternativ bevorzugten Ausführungsform handelt es sich bei dem Co(II)-Salz um Cobaltnitrat.

Ohne an eine bestimmte Theorie gebunden zu sein, wird davon ausgegangen, dass die Bildung der Cobalt(III)ammin-Komplexe beispielsweise nach folgender Gleichung abläuft.

[CO(H₂O)₆]²⁺ + SO₄²⁻ + *6*NH₃ + *0,25*O₂ + *0,5*H₂O → [Co(NH₃)₆]³⁺ + SO₄²⁻ + OH⁻ + *6*H₂O

Vorzugsweise wird der Suspension in Schritt b) des erfindungsgemäßen Verfahrens weiterhin Natriumhydroxid zugegeben. Es wurde überraschend gefunden, dass durch die Zugabe von Natriumhydroxid nicht nur eine erhöhte Umsetung, sondern auch die Agglomerationsneigung der beschichteten Hartstoffpartikel reduziert werden kann. In einer weiterhin bevorzugten Ausführungsform kann das erfindungsgemäße Verfahren unter Einsatz von Ultraschall durchgeführt werden. Es wurde überraschend gefunden, dass auf diese Weise insbesondere die Agglomerationsneigung der Partikel weiter reduziert werden kann. Alternativ oder zusätzlich kann die Agglomerationsneigung beispielsweise durch die Anwendung von Ultraschall oder Anpassung der Rührintensität beeinflußßt werden.

Arbeitet man bei der Auffällung von der hydroxidischen Cobaltverbindung ohne den Zusatz von Natronlauge wird vermutet, dass die Umsetzung der Cobalt(III)ammin-Komplexe durch Erhitzen und Austreiben von überschüssigem Ammoniak verläuft, wie am Beispiel des CoOOH gezeigt:

[CO(NH₃)₆]³⁺ + H₂O + OH⁻ + SO₄²⁻ → CoOOH + 2 NH₄⁺ + SO₄²⁻ + 4NH₃↑

Daher wird die Suspension in einer bevorzugten Ausführungsform auf eine Temperatur von 60 bis 100°C, besonders bevorzugt 65 bis 85°C erwärmt. In einer alternativen Ausführungsform kann die Umsetzung des Cobalt(III)amminkomplexes auch durch Arbeiten unter vermindertem Druck unterstützt werden.

Das erfindungsgemäße Verfahren ist nicht an eine bestimmte Korngröße der Hartstoffpartikel gebunden. Daher ist eine Ausführungsform bevorzugt, in der die Hartstoffpartikel eine Partikelgröße von 0,1 bis 100 µm, vorzugsweise 0,5 bis 50 µm, besonders bevorzugt 1 bis 40 µm aufweisen. Die Partikelgröße wurde gemäß ASTM E B330 unter Verwendung eines Fisher Model Sub-Sieve Sizer (FSSS) bestimmt. Im Sinne der vorliegenden Erfindung bezeichnet die Partikelgröße den Äquivalentdurchmesser des Partikels.

In einer bevorzugten Ausführungsform umfasst das erfindungsgemäße Verfahren anschließend an Schritt c) weiterhin einen Schritt d), in dem die hydroxidische Cobaltverbindung zu Cobaltmetall reduziert wird. Es wurde überraschend gefunden, dass die Reduktion unter Normaldruck im Wasserstoffstrom realisiert werden kann und die im Stand der Technik beschriebenen Bedingungen wie erhöhter Druck oder besondere Vorrichtungen nicht nötig sind. Daher ist eine Ausführungsform bevorzugt, in der die Reduktion der hydroxidischen Cobaltverbindung unter Normaldruck im Wasserstoffstrom durchgeführt wird.

Ein weiterer Gegenstand der vorliegenden Erfindung sind beschichtete Hartstoffpartikel, die gemäß diesem Verfahren erhalten werden.

Ein weiterer Gegenstand der vorliegenden Erfindung ist ein Pulver umfassend Hartstoffpartikel, das dadurch gekennzeichnet ist, dass die Hartstoffpartikel eine Beschichtung aus einer hydroxidischen Cobaltverbindung aufweisen. Vorzugsweise werden die beschichteten Hartstoffpartikel gemäß dem erfindungsgemäßen Verfahren hergestellt.

In einer bevorzugten Ausführungsform wird die chemische Zusammensetzung der hydroxidischen Cobaltverbindung durch die Formel CoOₓ(OH)_{y} beschrieben, wobei y = z-2x ist, z die Oxidationsstufe des Cobalts angibt mit 2≤z≤3 und 0≤x≤z-2 gilt. In einer besonders bevorzugten Ausführungsform gilt 2,5≤z≤3; besonders bevorzugt 2,9≤z≤3 und ganz besonders bevorzugt 2,98≤z≤3.

In einer weiterhin bevorzugten Ausführungsform sind die Hartstoffpartikel mit metallischem Cobalt beschichtet.

Es wurde überraschend gefunden, dass sich die erfindungsgemäßen Pulver durch eine gleichmäßige und nahezu vollständige Beschichtung mit der hydroxidischen Cobaltverbindung auszeichnen.

Die erfindungsgemäßen Pulver zeichnen sich durch eine sehr gleichmäßige Abscheidung der hydroxidischen Cobaltverbindung auf den Hartstoffpartikeln aus.

In einer bevorzugten Ausführungsform weisen die erfindungsgemäßen Pulver eine BET-Oberfläche von 0,05 bis 5 g/m², vorzugsweise 0,05 bis 2 g/m² auf, bestimmt gemäß ASTM D 3663, wenn das Cobalt in metallischer Form vorliegt. Wenn das Cobalt in der hydroxischen Form vorliegt, weisen die Pulver vorzugsweise eine spezifische Oberfläche von größer 5m²/g, vorzugsweise größer 10 m²/g bis 20 m²/g auf.

Das erfindungsgemäße Pulver zeichnet sich weiterhin durch eine hohe Sinteraktivität aus. Daher eignet sich das erfindungsgemäße Pulver beispielsweise für die Herstellung von Bauteilen, die sich durch ihre hohe mechanische Belastbarkeit und ihren hohen Verschleißwiderstand auszeichnen. Diese Eigenschaften gehen vor allem auf die im Pulver anwesenden charakteristischen Hartstoffe zurück. Damit von diesen Eigenschaften auch im fertigen Bauteil profitiert werden kann, sollte der Anteil an Hartstoffpartikeln im Hartmetall möglichst hoch sein. Dies bedeutet im Umkehrschluss, dass der Anteil an Bindemetall auf die geringste benötigte Menge begrenzt werden sollte, die nötig ist, um der natürlichen Sprödigkeit der Hartstoffe entgegen zu wirken. Die Verwendung von Cobalt als Bindemetall stellt weiterhin einen nicht zu vernachlässigenden Kostenfaktor dar, so daß auch aus diesem Grund der Bindemetallanteil das technisch mindestens notwendige Maß nicht überschreiten sollte. Daher ist eine Ausführungsform der vorliegenden Erfindung bevorzugt, in der die Beschichtung maximal 20 Gew.-%, vorzugsweise 2 bis 15 Gew.-% des Pulvers ausmacht.

Das erfindungsgemäße Pulver zeichnet sich durch eine geringe Agglomerationsneigung aus. Ein Maß für die Agglomerationsneigung ist beispielsweise das Verhältnis der D50-Werte der Partikelgrößenverteilung von beschichtetem zu unbeschichtetem Material.

In einer bevorzugten Ausführungsform beträgt das Verhältnis der Partikelgröße der beschichteten Hartstoffpartikel zur Partikelgröße der unbeschichteten Hartstoffpartikel 1,05 bis 15, vorzugsweise 1,05 bis 5, besonders bevorzugt 1,05 bis 1,5, wobei der D50-Wert der Korngrößenverteilung gemessen mit Master Sizer gemäß ISO 13320 für die Berechnung zugrunde liegt.

Davon zu unterscheiden ist der als Äquivalenzdurchmesser für eine mittlere Primärkorngröße zu verstehende sogenannte Fisher-Wert FSSS gemäß ASTM B330. Dieser Wert steigt erfindungsgemäß durch die Beschichtung nur in geringem Maße an, bei einem handelsüblichen WC DS 100 Material beispielsweise von 1,0 auf 1,3. Ein weiterer Gegenstand dieser Erfindung sind daher auch mit einer hydroxidischen Cobaltverbindung und /oder metallischem Cobalt beschichtete Hartstoffpartikel, die sich dadurch auszeichenen, dass das Verhältniss der FSSS-Werte gemäß ASTM B330 von beschichtetem Material zu unbeschichtetem Material 1,01 bis 4, vorzugsweise 1,01 bis 2 und besonders bevorzugt 1,01 bis 1, 5 beträgt.

In einer weiterhin bevorzugten Ausführungsform liegen die beschichteten Hartstoffpartikel als diskrete Partikel im erfindungsgemäßen Pulver vor. Es wurde überraschend gefunden, dass die gewöhnlich beobachtete starke Agglomeration bei den erfindungsmäßen Pulvern nicht oder nur in sehr geringem Umfang auftritt. Ohne an eine bestimmte Theorie gebunden zu sein, wird dies mit dem gewählten Beschichtungsmaterial sowie dem speziellen Verfahren zu dessen Abscheidung in Verbindung gebracht.

Die erfindungsgemäßen Pulver werden bevorzugt zur Herstellung von Hartmetallen eingesetzt, wobei sowohl konventionelle Fertigungsprozesse wie auch additive Fertigungstechnologien zur Verarbeitung verwendet werden können.

Ein weiterer Gegenstand der vorliegenden Erfindung ist daher die die Verwendung der erfindungsgemäßen beschichteten Hartstoffpartikel und/oder der erfindungsgemäßen Pulver in konventionellen Fertigungsprozessen. Dabei können die Partikel und/oder die Pulver beispielsweise über die klassische pulvermetallurgische Route via Formgebung, Kompaktierung, Entbinderung und Sintern bzw. Sinter-Hippen verarbeitet werden. Es wurde überraschend gefunden, dass durch die erfindungsgemäße Verwendung der im Fertigungsablauf üblicherweise notwendige vorgeschaltete, aufwendige und sicherheitstechnisch anspruchsvolle Mischschritt zwischen dem Hartstoff und dem Bindermetallpulver teilweise oder sogar komplett einspart werden kann.

Ein weiterer Gegenstand der vorliegenden Erfindung ist die Verwendung der erfindungsgemäßen beschichteten Hartstoffpartikel und/oder der erfindungsgemäßen Pulver in additiven Fertigungsprozessen. In diesen Fertigungsprozessen werden die Pulver und/oder die Partikel vorzugsweise direkt als Pulverbett, in sprühgranulierter Pulverform oder als Bestandteil von Druckertinten eingesetzt. Vorzugsweise handelt es sich bei den additiven Fertigungsprozessen um Powder Bed-Fusion-Prozesse, wie z. B. Selective Laser Sintering, Binder Jetting-Technologien oder Direct Printing-Verfahren

Die vorliegende Erfindung wird anhand der folgenden Beispiele näher erläutert, wobei dies keinesfalls als Einschränkung des Erfindungsgedankens zu verstehen ist.

Zunächst wurde eine Cobaltamminkomplexe enthaltene Lösung wie folgt hergestellt:
a) In 4,5L Wasser wurden 1145g Cobaltsulfatheptahydrat gelöst und die Lösung anschließend unter Rühren mit 3L konz.(25%) Ammoniak versetzt. Danach wurde über eine Glasfritte 16h lang Luft eingeleitet. Eine anfängliche Niederschlagsbildung von blauem Co(OH)₂ löste sich schnell auf und man erhielt eine tiefrote Lösung. Diese wurde mit Wasser auf genau 8,00L aufgefüllt und jeweils 1500mL wurden zur Beschichtung von 400g WC (5 verschiedene Qualitäten) eingesetzt
b) Die Beschichtung von Wolframcarbid mit der hydroxidischen Cobaltverbindung nach dem erfindungsgemäßen Verfahren wurde wie folgt durchgeführt: In einem beheizbaren Rührreaktor wurden 2L Wasser vorgelegt und darin 400g WC unter Rühren suspendiert. Die Suspension wurde dann mit 1500mL der Cobalthexamminkomplex-Lösung versetzt und mit ca.0,5L Wasser auf 4L aufgefüllt. Anschließend wurde die Lösung unter permanentem Rühren langsam innerhalb von 5h auf 80°C erwärmt und dann noch 3h bei dieser Temperatur weiter gerührt. Während der gesamten Zeit wurden Flüssigkeitsverluste durch Verdampfung durch Zudosierung von Wasser ausgeglichen und so das Volumen der Suspension konstant gehalten. Ammoniak wurde ausgetrieben, der pH-Wert sank von 10 auf 6,6 bis 6,8 und die Suspension nahm eine dunklebraune Farbe an.
c) Die noch heiße Suspension wurde filtriert, der dunkelbraune Filterkuchen mit 2L warmem Wasser (60°C) gewaschen und anschließend im Trockenschrank bei 90°C über Nacht getrocknet. Die erhaltenen Mengen sowie analysierte Eigenschaften der erfindungsgemäßen, mit einer hydroxidischen Cobaltverbindung beschichteten Wolframcarbide sind in Tabelle 1 zusammengefaßt. Nicht ausgefallenes Cobalt aus den Mutterlaugen und Filtraten wurde zu Cobalt(II)salzen umgearbeitet um somit wiederverwendet werden zu können.
d) Von den erhaltenen mit einer hydroxidischen Cobaltverbindung beschichteten Wolframcarbiden wurde ein jeweils Teil jeweils wie folgt reduziert: In ein Metallschiffchen (Thermax) wurden 200g der Partikel eingewogen. Das Schiffchen wurde in einen Rohrofen geschoben. Nach Spülung mit Argon wurde Wasserstoff durch den Ofen geleitet und die Temperatur mit 10°C/min auf zunächst 650°C gesteigert. Diese Temperatur wurde 2h gehalten und danach mit 10°C/min weiter erhitzt bis auf 750°C. Nach einer Haltezeit von ebenfalls 2h bei 750°C ließ man den Ofen unter Argon abkühlen. Die erhaltenen Mengen sowie analysierte Eigenschaften der erfindungsgemäßen, mit metallischem Cobalt beschichteten Wolframcarbide sind ebenfalls zusammenfassend in der folgenden Tabelle 1 dargestellt.

**Tabelle 1:**

| | Beispiel 1 | Beispiel 2 | Beispiel 3 | Beispiel 4 | Beispiel 5 |
|---|---|---|---|---|---|
| Eingesetzte Wotframcarbide (Standardqualitäten H.C.Starck Tungsten GmbH) | | | | | |
| WC-Qualität: | WC DS60 | WC DS100 | WC DS250 | WC MAS900 | WC MAS4000 |
| Äquivalenzdurchmesser FSSS [µm]: | 0,64 | 1,04 | 2,4 | 11,4 | 35 |
| Partikelgrößenverteilung D₅₀ [µm]: | 0,81 | 1,26 | 3,24 | 13,2 | 51,9 |
| spez. Oberfläche [m²/g]: | 1,70 | 1,01 | 0,45 | 0,09 | 0,03 |
| | | | | | |

| Beschichtung von Wolframcarbiden mit hydroxidischer Cobaltverbindung | | | | | |
|---|---|---|---|---|---|
| Einsatz WC [g]: | 400 | 400 | 400 | 400 | 400 |
| Ausbeute WC/CoOₓ(OH)_{y}][g]: | 466,6 | 457,0 | 465,3 | 458,3 | 467,1 |
| Co [ma%]: | 7,71 | 7,97 | 7,83 | 7,91 | 7,74 |
| Partikelgrößenverteilung D₅₀ [µm]: | 9,58 | 7,64 | 13,89 | 15,18 | 63,2 |
| | | | | | |

| Reduktion der mit hydroxidischer Cobaltverbindung beschichteten Wolframcarbide | | | | | |
|---|---|---|---|---|---|
| Einsatz WC/Coₓ(OH)_{y} [g]: | 200 | 200 | 200 | 200 | 200 |
| Ausbeute WC/Co [g]: | 187,2 | 191,4 | 188,0 | 190,8 | 187,1 |
| Co [ma%]: | 8,24 | 8,37 | 8,33 | 8,29 | 8,27 |
| Äquivalenzdurchmesser FSSS [µm]: | 1,02 | 1,28 | 3,26 | | |
| Partikelgrößenverteilung D₅₀ [µm]: | 10,49 | 8,49 | 15,74 | 18,06 | 68,5 |
| spez. Oberfläche [m²/g]: | 1,88 | 1,32 | 0,53 | 0,18 | 0,06 |

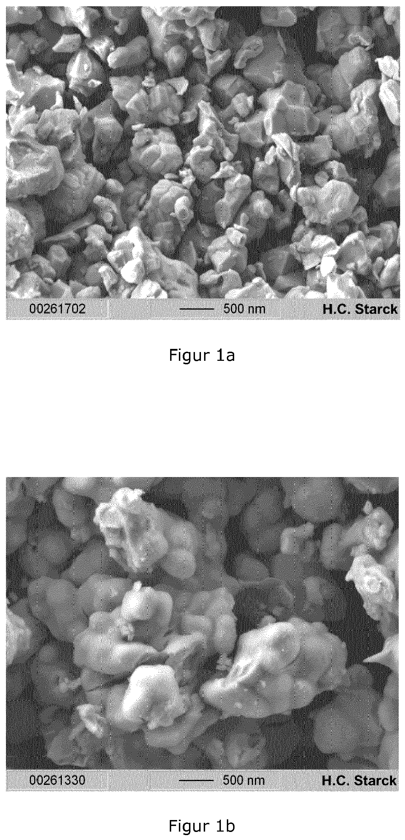

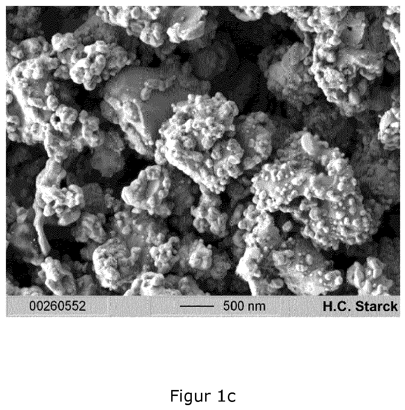

Figuren 1a, 1b und 1c zeigen einzelne Schritte des erfindungsgemäßen Verfahrens für die feine Wolframcarbid Qualität WC DS100.

Figur 1a zeigt das ursprüngliche WC-Pulver mit einer Partikelgröße von 1,04 µm (FSSS).

Figur 1b zeigt die mit CoOₓ(OH)_{y} beschichteten WC-Partikel.

Figur 1c zeigt die beschichteten Partikel, bei denen das Cobalt als Metall vorliegt. Die Partikelgröße wurde nach dem FSSS-Verfahren mit 1,28 µm gemessen

Als Ausgangsstoff wurde in diesem Ausführungsbeispiel (Beispiel 2 aus Tabelle 1) ein handelsübliches WC DS100 der Fa. H.C. Starck Tungsten GmbH mit einem FSSS-Wert von 1,04 µm und einer spezifischen BET-Oberfläche von 1,01 m²/g verwendet. Der D50-Wert der Partikelgrößenverteilung des eingesetzten WC-Pulvers betrug 1,2 µm. Das resultierende Endprodukt WC/Co wies einen FSSS-Wert von 1,28 µm sowie eine spezifische BET-Oberfläche von 1,32 m²/g auf. Der D50-Wert der Partikelgrößenverteilung, gemessen mit Laserbeugung gemäß ISO 13320, betrug 8,5 µm. Der Cobaltgehalt wurde zu 8,4 % bestimmt. Wie ein Vergleich zeigt, haben sich die spezifische Oberfläche (BET ISO 9277) und der FSSS-Wert nur wenig verändert. Die geringe Änderung zeigt, dass die erfindungsgemäßen Partikel eine geringe Agglomerationsneigung aufweisen. Durch diese Eigenschaft sind die erfindungsgemäße Pulver sehr gut zum Einsatz in konventionellen Herstellungsprozessen von Hartmetallbauteilen geeignet, wo sie zu Grünkörpern verpresst werden können. Durch die resultierende Fließfähigkeit können die Pulver auch für additive Fertigungsverfahren wie Lasermelting eingesetzt werden, bei denen das fertige Bauteil additiv aufgebaut wird.

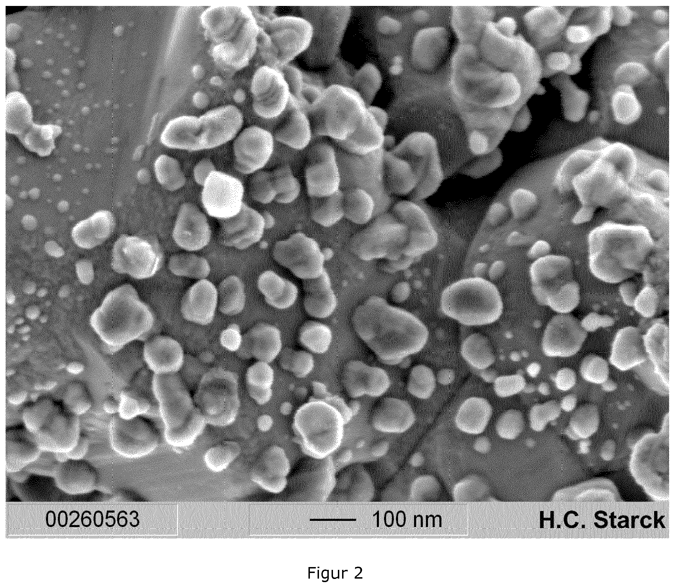

Figur 2 zeigt eine achtzigtausendfache Vergrößerung der erfindungsgemäßen mit Cobaltmetall beschichteten WC-Partikel gemäß Beispiel 2 .

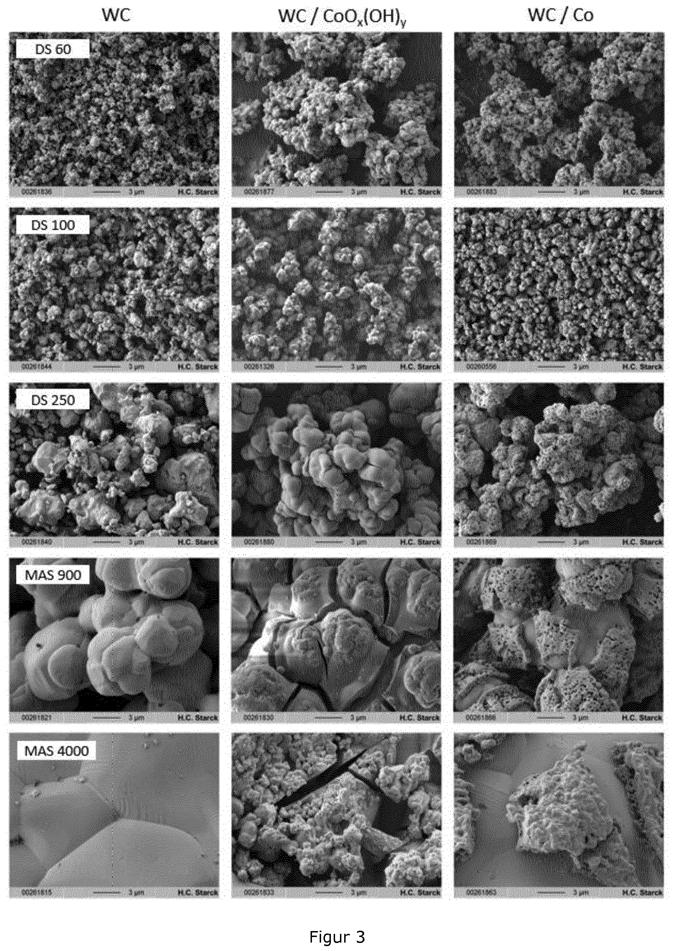

Figur 3 zeigt im Elektronenmikroskop, dass sich das erfindungsgemäße Verfahren auf alle üblichen WC-Qualitäten anwenden lässt. Von oben nach unten sind die Aufnahmen der 5 Beispiele jeweils für WC, WC/CoOx(OH)y und WC/Co abgebildet.

Man sieht, dass sich bei feinen WC-Pulvern die Beschichtung bei geringer Schichtdicke nahezu perfekt ausgebildet. Für größere WC-Partikel steigt bei gleichem Cobaltgehalt die Schichtdicke und es bilden sich Trocknungsrisse im mit Co-Hydroxid beschichteten WC. Auch beim Reduzieren kommt es naturgemäß zu einem Schrumpfungsprozeß, da das metallische Cobalt eine höhere Dichte hat als das Cobalthydroxid. Insbesondere bei groben WC-Qualitäten kommt es dadurch zu einer Inselbildung von metallischem Cobalt auf der Oberfläche der WC-Partikel. Diese metallischen porösen, nanoskaligen Cobaltbereiche platzen jedoch nicht ab, sondern bleiben überraschenderweise fest auf der Oberfläche der WC-Partikel haften und sind in der Pulverschüttung sehr gleichmäßig verteilt.

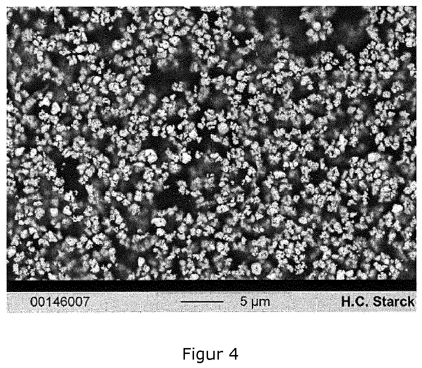

Figur 4 zeigt beschichtete WC-Partikel, bei denen die Beschichtung nach einem herkömmlichen Verfahren aufgebracht wurde. Dazu wurden WC-Partikel in einer CoSO₄-Lösung suspendiert, die Lösung auf 60°C erwärmt und NaHCO₃ hinzugegeben. Die erhaltenen mit basischem Cobaltcarbonat beschichteten Partikel wurden in einen Wasserstoffstrom eingebracht, um das Cobaltcarbonat zu metallischem Cobalt zu reduzieren. Wie aus Figur 4 ersichtlich, führt dies zu großen Cobaltpartikeln, die zum großen Teil separat vorliegen und keine Beschichtung bilden.

## Patentansprüche

1. Verfahren zur Herstellung von beschichteten Hartstoffpartikeln umfassend die folgenden Schritte:
a) Bereitstellen einer wässrigen Lösung umfassend mindestens einen Cobaltammin-Komplex;
b) Zugabe von Hartstoffpartikeln zu der wässrigen Lösung unter Erhalt einer Suspension umfassend mit einer hydroxidischen Cobaltverbindung beschichtete Hartstoffpartikel; und
c) Abtrennen der beschichteten Hartstoffpartikel.

2. Verfahren nach Anspruch 1, **dadurch gekennzeichnet, dass** die hydroxidische Cobaltverbindung ausgewählt ist aus der Gruppe bestehend aus Cobaltoxyhydroxid, Cobalthydroxid und Mischungen davon.

3. Verfahren nach einem oder beiden der Ansprüche 1 oder 2, **dadurch gekennzeichnet, dass** es sich bei dem Hartstoff um Wolframcarbid (WC) handelt.

4. Verfahren nach einem oder mehrerer der vorangehenden Ansprüche, **dadurch gekennzeichnet, dass** es sich bei dem mindestens einen Cobaltammin-Komplex um einen Cobalthexamin-Komplex handelt.

5. Verfahren nach einem oder mehrerer der vorangehenden Ansprüche, **dadurch gekennzeichnet, dass** die wässrige Lösung in Schritt a) dadurch hergestellt wird, dass eine wässrige Lösung umfassend mindestens ein Co(II)-Salz mit Ammoniak versetzt wird und die erhaltene Mischung anschließend mit einem Oxidationsmittel versetzt wird.

6. Verfahren nach Anspruch 5, **dadurch gekennzeichnet, dass** das Co(II)-Salz ausgewählt ist aus der Gruppe bestehend aus Sulfat, Nitrat, Chlorid, Acetat und Mischungen davon.

7. Verfahren nach einem oder mehrerer der vorangehenden Ansprüche, **dadurch gekennzeichnet, dass** die Suspension in Schritt b) weiterhin Natriumhydroxid umfasst.

8. Verfahren nach einem oder mehrerer der vorangehenden Ansprüche, **dadurch gekennzeichnet, dass** das Verfahren anschließend an Schritt c) weiterhin einen Schritt d) umfasst, in dem die hydroxidische Cobaltverbindung zu Cobaltmetall reduziert wird.

9. Verfahren nach Anspruch 9, **dadurch gekennzeichnet, dass** die Reduktion der hydroxidischen Cobaltverbindung unter Normaldruck im Wasserstoffstrom durchgeführt wird.

10. Beschichtete Hartstoffpartikel erhältlich nach dem Verfahren gemäß einem oder mehrerer der Ansprüche 1 bis 9.

11. Pulver umfassend Hartstoffpartikel, **dadurch gekennzeichnet, dass** die Hartstoffpartikel eine Beschichtung aus einer hydroxidischen Cobaltverbindung aufweisen.

12. Pulver gemäß Anspruch 11, **dadurch gekennzeichnet, dass** die chemische Zusammensetzung der hydroxidischen Cobaltverbindung durch die Formel CoOₓ(OH)_{y} beschrieben wird, wobei y = z-2x ist, z die Oxidationsstufe des Cobalts angibt mit 2≤z≤3 und 0≤x≤z-2.

13. Pulver gemäß Anspruch 12, **dadurch gekennzeichnet, dass** 2,5≤z≤3; besonders bevorzugt 2,9≤z≤3 und ganz besonders bevorzugt 2,98≤z≤3.

14. Pulver gemäß einem oder mehrerer der vorangehenden Ansprüche, **dadurch gekennzeichnet, dass** die beschichteten Hartstoffpartikel nach einem Verfahren gemäß einem oder mehrerer der Ansprüche 1 bis 9 hergestellt werden.

15. Pulver gemäß einem oder mehrerer der vorangehenden Ansprüche, **dadurch gekennzeichnet, dass** die Beschichtung maximal 20 Gew.-%, vorzugsweise 2 bis 15 Gew.-% des Pulvers ausmacht.

16. Pulver gemäß einem oder mehrerer der Ansprüche 11 bis 15 oder Hartstoffpartikel gemäß Anspruch 10, **dadurch gekennzeichnet, dass** das Verhältnis der Partikelgröße der beschichteten Hartstoffpartikel zur Partikelgröße der unbeschichteten Hartstoffpartikel 1,05 bis 15, vorzugsweise 1,05 bis 5, besonders bevorzugt 1,05 bis 1,5 beträgt, bestimmt gemäß ISO 13320.

17. Pulver gemäß einem oder mehrerer der Ansprüche 11 bis 15 oder Hartstoffpartikel gemäß Anspruch 10, **dadurch gekennzeichnet, dass** das Verhältnis der Partikelgröße gemäß FSSS der beschichteten Hartstoffpartikel zur Partikelgröße gemäß FSSS der unbeschichteten Hartstoffpartikel 1,01 bis 4, vorzugsweise 1,01 bis 2, besonders bevorzugt 1,01 bis 1, 5 beträgt, bestimmt gemäß ASTM B330.

18. Verwendung eines Pulvers gemäß einem oder mehrerer der Ansprüche 11 bis 16 oder Hartstoffpartikel gemäß Anspruch 10 zur Herstellung von Hartmetallerzeug nissen.

19. Verwendung eines Pulvers gemäß einem oder mehrerer der Ansprüche 11 bis 16 oder Hartstoffpartikel gemäß Anspruch 10 in der konventionellen Herstellung von Hartmetallerzeugnissen.

20. Verwendung eines Pulvers gemäß einem oder mehrerer der Ansprüche 11 bis 16 oder Hartstoffpartikel gemäß Anspruch 10 in additiven Fertigungsprozessen zur Herstellung von Hartmetallerzeugnissen.
